# EUROPÄISCHE PATENTSCHRIFT

(11) **EP 1 055 826 B1**
(45) Veröffentlichungstag und Bekanntmachung des Hinweises auf die Patenterteilung: **20.07.2005**
(21) Anmeldenummer: 00110017.1
(22) Anmeldetag: 12.05.2000
(51) Int. Cl.: F04D 29/62, F16K 27/04

(54) **Ventil mit auswechselbarem Absperrkörper**
Valve with replaceable closure element
Soupape avec piéce de fermeture remplaçable

(30) Priorität: 26.05.1999 DE 19923936
(43) Veröffentlichungstag der Anmeldung: 29.11.2000
(73) Patentinhaber: WILO AG, 44263 Dortmund (DE)
(72) Erfinder: Houery, Thibault, 35400 Saint Malo (FR)
(74) Vertreter: COHAUSZ DAWIDOWICZ HANNIG & PARTNER

(56) Entgegenhaltungen:
- DE-A- 3 618 644
- US-A- 3 582 229
- US-A- 3 776 659
- US-A- 5 131 432

## Beschreibung

Die Erfindung betrifft eine Kreiselpumpe mit im Pumpengehäuse integriertem Ventil, das ein Ventilgehäuse mit mindestens einem Leitungseingang und mindestens einem Leitungsausgang aufweist und in dessen Ventilinnenraum ein verschwenkbarer und/oder verschiebbarer Absperrkörper gelagert ist.

Eine solche Pumpe ist aus der US-A-3 776 659 bekannt.

Pumpen mit derartig integrierten Ventilen sind allgemein bekannt. Ein bevorzugtes Einsatzgebiet ist in Boilern und/oder in Hydraulikbaugruppen für kombinierte Heizwasser- und Sanitärwasseranlagen. Hierbei ist häufig die Durchführung von Reinigungs- oder Wartungsarbeiten insbesondere an den Ventilsitzen und am Absperrkörper erforderlich. Auch kann es erforderlich sein, den Absperrkörper auszuwechseln. Dies ist aufgrund der beengten Platzverhältnisse mit einem erheblichen Arbeitsaufwand und mit hohen Kosten verbunden. Oft sind die Reinigungs- bzw. Wartungsarbeiten sogar nur dann durchführbar, wenn die Pumpe mit dem Ventil von den angeschlossenen Rohrleitungen getrennt und ausgebaut wird. Nur so können die zu reinigenden bzw. zu wartenden Stellen zugänglich gemacht werden. Dadurch werden der Arbeitsaufwand und die Wartungskosten zusätzlich erhöht.

Aufgabe der Erfindung ist es, eine konstruktiv einfache, preiswert herzustellende und leicht handhabbare Pumpen-Ventil-Einheit der eingangs genannten Art zu schaffen, die bei kompakter Bauweise eine leichte Reinigung bzw. Wartung der Ventilsitze und des Absperrkörpers ermöglicht, ohne daß die Pumpe oder das Ventil hierzu von den angeschlossenen Leitungen getrennt werden muß.

Diese Aufgabe wird erfindungsgemäß durch eine Vorrichtung nach Anspruch 1 gelöst. Wesentlich ist dabei, daß das Ventilgehäuse zusätzlich zu den Leitungseingängen und Leitungsausgängen mindestens eine verschließbare Öffnung aufweist, durch die der Absperrkörper und/oder die Ventilsitze und/oder Teile der Pumpe zugänglich sind.

Hierdurch können die Ventilsitze sowie der Absperrkörper bei einfacher Konstruktion einfach und schnell erreicht werden, ohne daß dazu eine Trennung der Anschlußleitungen erforderlich ist. Nach dem Absperren oder dem Entleeren des in der Anlage enthaltenen Fördermediums können Reinigungs- und Wartungsarbeiten daher auch bei beengten Platzverhältnissen in Boilern oder Hydraulikbaugruppen schnell und kostengünstig durchgeführt werden. Insbesondere können bei regelmäßigen Reinigungsarbeiten Schäden bzw. Ausfälle des Ventils und/oder der Pumpe verhindert werden.

Besonders vorteilhaft ist es, wenn die Öffnung durch einen vom Ventilgehäuse lösbaren Gehäusedeckel verschlossen ist. Der Gehäusedeckel kann vorzugsweise mit Schrauben am Ventilgehäuse befestigt werden, so daß bei sicherer Befestigung eine schnelle Lösbarkeit gewährleistet ist. Alternativ kann die Öffnung auch durch eine Klappe, einen Schieber oder ähnliche Verschlußmittel verschlossen sein.

In einer bevorzugten Ausführungsform sind dabei an dem Gehäusedeckel Stellmittel zum Verstellen des Absperrkörpers vorgesehen. Dadurch können die Stellmittel besonders schnell und einfach zusammen mit dem Gehäusedeckel von dem Ventil entfernt werden. Somit wird einerseits zusätzlicher Platz für die Reinigungs- bzw. Wartungsarbeiten geschaffen und andererseits können die Stellmittel selber besonders einfach gereinigt oder gewartet zu werden. Bevorzugt können die Stellmittel dabei einen Schrittmotor umfassen.

Besonders vorteilhaft ist es ferner, wenn das Ventilgehäuse eine weitere verschließbare Wartungsöffnung aufweist, durch die der Absperrkörper aus dem Ventilinnenraum entfernt werden kann. Diese zusätzliche Wartungsöffnung ist dabei so groß dimensioniert, daß der lösbar im Ventilinnenraum gelagerte Absperrkörper hindurch geführt werden kann. Somit kann ein defekter Absperrkörper schnell und einfach gegen einen neuen Abnsperrkörper ausgetauscht werden.

Die Wartungsöffnung kann vorzugsweise ebenfalls durch einen vom Ventilgehäuse lösbaren Wartungsdeckel verschlossen sein.

Dabei ist es besonders günstig, wenn der Wartungsdeckel eine Öffnung aufweist, durch die hindurch Betätigungsmittel für den Absperrkörper, beispielsweise ein Schieber, vom Ventilinnenraum bis auf die Außenseite des Ventils geführt sind. Bei einer Entfernung des Wartungsdeckels werden die Betätigungsmittel und der daran befestigte Absperrkörper gleichzeitig mit aus dem Ventil entfernt. Dabei sind die Betätigungsmittel vorzugsweise gegen den Wartungsdeckel abgedichtet.

Vorzugsweise verläuft die Ebene der Öffnung senkrecht zur Drehachse des Pumpenlaufrades. Ferner wird erfindungsgemäß vorgeschlagen, daß die Ebene der Wartungsöffnung senkrecht zu der Ebene liegt, in der sich das Pumpenlaufrad dreht.

In einer bevorzugten Ausführungsform ist das Ventil ein Drei-Wege-Ventil. Es können jedoch auch andere Ventilbauformen verwendet werden. Der Absperrkörper dient dabei als Stellkörper um die einzelnen Rohrleitungen miteinander zu verbinden oder voneinander zu trennen.

Vorzugsweise kann die erfindungsgemäße Vorrichtung in einen Boiler oder in eine Hydraulikbaugruppe für eine kombinierte Heizwasser- und Sanitärwasseranlage integriert sein.

Weitere Vorteile und Merkmale der Erfindung ergeben sich aus den Unteransprüchen sowie aus der nachfolgenden Beschreibung und den in den Zeichnungen dargestellten Ausführungsbeispielen.

Es zeigen:

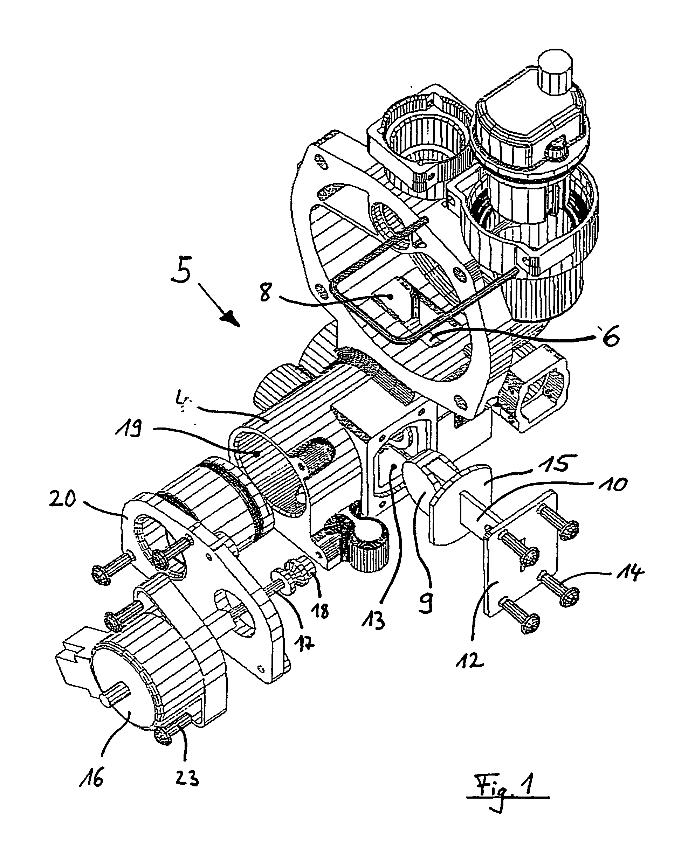

- Figur 1:: Eine dreidimensionale Ansicht der erfindungsgemäßen Vorrichtung aus einer ersten Perspektive

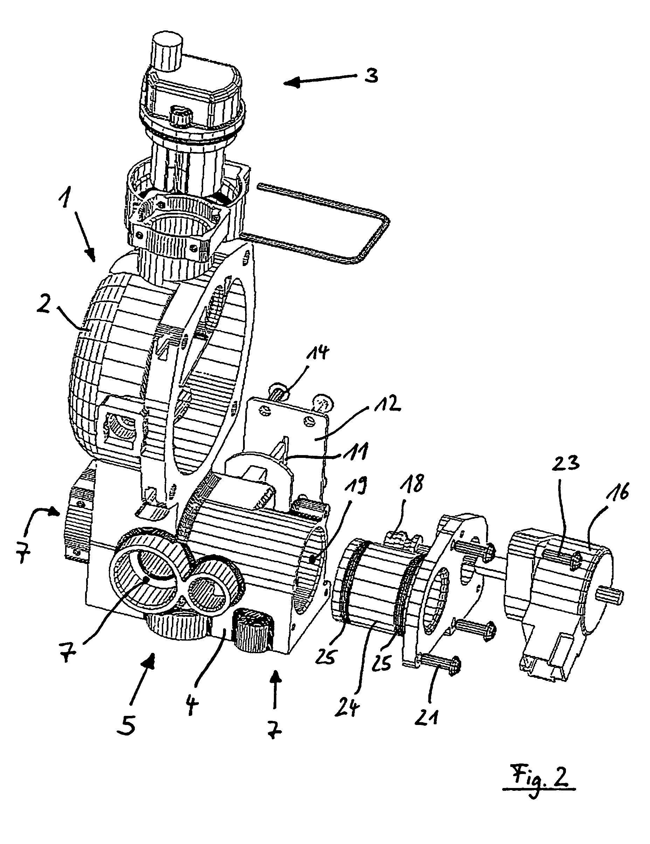

- Figur 2:: Eine dreidimensionale Ansicht der erfindungsgemäßen Vorrichtung aus einer zweiten Perspektive

Das Pumpengehäuse 1 einer Kreiselpumpe ist zweigeteilt, wobei in den Zeichnungen lediglich eine Pumpengehäusehälfte 2 dargestellt ist. Im oberen Bereich des Pumpengehäuses befindet sich eine Vorrichtung 3 zur Luftabscheidung.

In die Pumpengehäusehälfte 2 ist im unteren Bereich das Ventilgehäuse 4 eines Drei-Wege-Ventils 5 einstückig integriert. Dabei ist der Ventilinnenraum mit der Pumpenkammer durch einen Strömungskanal 6 verbunden.

Das Ventil 5 weist mehrere Leitungseingänge 7 sowie einen Leitungsausgang 8 auf, der durch den Kanal 6 in die Pumpenkammer führt. Im Ventilinnenraum befindet sich ein Absperrkörper 9, der über einen Schieber 10 als Betätigungsmittel verschiebbar ist und dadurch die gewünschten Verbindungen zwischen den Eingängen 7 und dem Ausgang 8 herstellt oder absperrt. Der Schieber 10 ist durch einen Schlitz 11 in einem Deckel 12 geführt, der eine Wartungsöffnung 13 abschließt. Der Deckel 12 ist mittels Schrauben 14 lösbar am Ventilgehäuse 4 befestigt und kann somit schnell und einfach abgenommen werden. Dabei ist die Wartungsöffnung 13 größer als der Querschnitt des Absperrkörpers 9, so daß der Absperrkörper 9 durch die Wartungsöffnung 13 hindurch aus dem Ventilgehäuse 4 entnommen und gewartet bzw. durch einen anderen Absperrkörper 9 ersetzt werden kann. Auf der Innenseite des Deckels 12 ist ein Dichtelement 15 angeordnet, um den Schieber 10 am Schlitz 11 gegen den Deckel 12 abzudichten.

Der Schieber 10 wird durch einen Schrittmotor 16 als Stellmittel verstellt, auf dessen Antriebswelle 17 ein Ritzel 18 angeordnet ist, das mit einer Verzahnung des Schiebers 10 kämmt.

Das Ventilgehäuse 4 weist zusätzlich zu den Leitungseingängen 7, dem Leitungsausgang 8 und der Wartungsöffnung 13 eine Öffnung 19 auf, durch die der Absperrkörper 9 und die Ventilsitze zugänglich sind. Diese Öffnung 19 ist durch einen Gehäusedeckel 20 verschlossen, der mittels Schrauben 21 lösbar an dem Ventilgehäuse 4 befestigt ist. An einem überstehenden Randbereich 22 des Gehäusedeckels 20 ist der Schrittmotor 16 mittels Schrauben 23 lösbar befestigt.

Der Gehäusedeckel 20 weist einen zylindrisch vorstehenden Bereich 24 auf, der in die Öffnung 19 hineinreicht. An der Außenseite des zylindrischen Bereichs 24 befinden sich zwei O-Ringe 25 zur Abdichtung gegen die Innenwandungen des Ventilgehäuses 4. Im seinem Innenraum ist der zylindrische Bereich 24 durch einen Boden verschlossen.

Das Pumpengehäuse 1 mit dem integrierten Ventilgehäuse 4 ist in einer Hydraulikbaugruppe für eine kombinierte Heizwasser- und Sanitärwasseranlage eingesetzt, in der besonders wenig Platz zur Verfügung steht. Durch Entfernen des Gehäusedeckels 20 können der Absperrkörper 9 sowie die Ventilsitze von vorne erreicht und auf einfache Weise schnell und kostengünstig und somit auch in kurzen Wartungsintervallen von Ablagerungen gereinigt bzw. gewartet werden. Ein Lösen der Verbindungen zwischen den Leitungseingängen 7 und den angeschlossenen Rohrleitungen ist dabei nicht erforderlich.

Zusätzlich kann der Absperrkörper 9 zu Reinigungs- oder Instandsetzungszwecken leicht durch die Wartungsöffnung 13 aus dem Ventilinnenraum entnommen werden. Auch hierzu ist es nicht erforderlich, die angeschlossenen Rohrleitungen der Heizwasser- und Sanitärwasseranlage zu lösen.

## Patentansprüche

1. Kreiselpumpe mit im Pumpengehäuse (1) integriertem Ventil (5), das ein Ventilgehäuse (4) mit mindestens einem Leitungseingang (7) und mindestens einem Leitungsausgang (8) aufweist und in dessen Ventilinnenraum ein verschwenkbarer und/oder verschiebbarer Absperrkörper (9) gelagert ist, **dadurch gekennzeichnet, daß** das Ventilgehäuse (4) zusätzlich zu den Leitungseingängen (7) und Leitungsausgängen (8) mindestens eine verschließbare Öffnung (19) aufweist, durch die der Absperrkörper (9) und/oder die Ventilsitze und/oder Teile der Pumpe zugänglich sind.

2. Vorrichtung nach Anspruch 1, **dadurch gekennzeichnet, daß** die Öffnung (19) durch einen vom Ventilgehäuse (4) lösbaren Gehäusedeckel (20) verschlossen ist.

3. Vorrichtung nach Anspruch 2, **dadurch gekennzeichnet, daß** an dem Gehäusedeckel (20) Stellmittel (16) zum Verstellen des Absperrkörpers (9) vorgesehen sind.

4. Vorrichtung nach Anspruch 3, **dadurch gekennzeichnet, daß** die Stellmittel einen Schrittmotor (16) umfassen.

5. Vorrichtung nach einem der vorherigen Ansprüche, **dadurch gekennzeichnet, daß** das Ventilgehäuse (4) eine weitere verschließbare Wartungsöffnung (13) aufweist, durch die der Absperrkörper (9) aus dem Ventilinnenraum entfernt werden kann.

6. Vorrichtung nach Anspruch 5, **dadurch gekennzeichnet, daß** die Wartungsöffnung (13) durch einen vom Ventilgehäuse (4) lösbaren Wartungsdeckel (12) verschlossen ist.

7. Vorrichtung nach Anspruch 6, **dadurch gekennzeichnet, daß** der Wartungsdeckel (12) eine Öffnung (11) aufweist, durch die hindurch Betätigungsmittel (10) für den Absperrkörper (9) vom Ventilinnenraum bis auf die Außenseite des Ventils (5) geführt sind.

8. Vorrichtung nach Anspruch 7, **dadurch gekennzeichnet, daß** die Betätigungsmittel (10) gegen den Wartungsdeckel (12) abgedichtet sind.

9. Vorrichtung nach einem der vorherigen Ansprüche, **dadurch gekennzeichnet, daß** die Ebene der Öffnung (19) senkrecht zur Drehachse des Pumpenlaufrades verläuft.

10. Vorrichtung nach einem der vorherigen Ansprüche, **dadurch gekennzeichnet, daß** die Ebene der Wartungsöffnung (13) senkrecht zu der Ebene liegt, in der sich das Pumpenlaufrad dreht.

11. Vorrichtung nach einem der vorherigen Ansprüche, **dadurch gekennzeichnet, daß** das Ventil (5) ein Drei-Wege-Ventil ist.

12. Vorrichtung nach einem der vorherigen Ansprüche, **dadurch gekennzeichnet, daß** sie in eine Hydraulikbaugruppe für eine kombinierte Heizwasser- und Sanitärwasseranlage integriert ist.

## Claims

1. A centrifugal pump with, integrated in the pump housing (1), a valve (5) having a valve housing (4) with at least one line inlet (7) and at least one line outlet (8) and in the valve interior space of which is mounted a swivelable and/or displaceable blocking element (9), **characterized by** the fact that the valve housing (4) has, in addition to the line inlets (7) and line outlets (8), at least one closable opening (19) through which the blocking element (9) and/or the valve seats and/or parts of the pump are accessible.

2. A device according to claim 1, **characterized by** the fact that the opening (19) is closed by a housing cover (20) which can be detached from the valve housing (4).

3. A device according to claim 2, **characterized by** the fact that positioning means (16) are provided on the housing cover (20) for the purpose of positioning the blocking element (9).

4. A device according to claim 3, **characterized by** the fact that the positioning means comprise a stepping motor (16).

5. A device according to any of the preceding claims, **characterized by** the fact that the valve housing (4) has a further closable maintenance opening (13) through which the blocking element (9) can be removed from the valve interior space.

6. A device according to claim 5, **characterized by** the fact that the maintenance opening (13) is closed by a maintenance cover (12) that can be detached from the valve housing (4).

7. A device according to claim 6, **characterized by** the fact that the maintenance cover (12) has an opening (11) through which the actuating means (10) for the blocking element (9) are conducted from the valve interior space to the outside of the valve (5).

8. A device according to claim 7, **characterized by** the fact that the actuating means (10) are sealed off against the maintenance cover (12).

9. A device according to any of the preceding claims, **characterized by** the fact that the plane of the opening (19) runs perpendicular to the rotary axis of the pump impeller.

10. A device according to any of the preceding claims, **characterized by** the fact that the plane of the maintenance opening (13) lies perpendicular to the plane in which the pump impeller rotates.

11. A device according to any of the preceding claims, **characterized by** the fact that the valve (5) is a three-way valve.

12. A device according to any of the preceding claims, **characterized by** the fact that it is integrated in a hydraulic assembly for a combined hot water and sanitary water system.

## Revendications

1. Pompe centrifuge comprenant une soupape (5) intégrée dans le boîtier de pompe (1), qui présente un boîtier de soupape (4) comprenant au moins une entrée de conduite (7) et au moins une sortie de conduite (8) et dans l'espace intérieur de laquelle est monté une pièce de fermeture (9) avec une possibilité de pivotement et/ou de translation, **caractérisée en ce que** le boîtier de soupape (4) présente en supplément des entrées de conduites (7) et des sorties de conduites (8) au moins une ouverture (19) pouvant être obturée, au travers de laquelle la pièce de fermeture (9) et/ou les sièges de soupape et/ou des parties de la pompe sont accessibles.

2. Dispositif suivant la revendication 1, **caractérisé en ce que** l'ouverture (19) est fermée par un couvercle de boîtier (20) détachable du boîtier de soupape (4).

3. Dispositif suivant la revendication 2, **caractérisé en ce que** des moyens de commande (16) sont prévus sur le couvercle de boîtier (20) pour déplacer la pièce de fermeture (9).

4. Dispositif suivant la revendication 3, **caractérisé en ce que** les moyens de commande comportent un moteur pas à pas (16).

5. Dispositif suivant l'une des revendications précédentes, **caractérisé en ce que** le boîtier de soupape (4) présente une autre ouverture de maintenance pouvant être obturée (13), au travers de laquelle la pièce de fermeture (9) peut être retirée de l'espace intérieur de soupape.

6. Dispositif suivant la revendication 5, **caractérisé en ce que** l'ouverture de maintenance (13) est fermée par un couvercle de maintenance (12) détachable du boîtier de soupape (4).

7. Dispositif suivant la revendication 6, **caractérisé en ce que** le couvercle de maintenance (12) présente une ouverture (11) au travers de laquelle sont guidés des moyens d'actionnement (10) pour la pièce de fermeture (9) de l'espace intérieur jusqu'à l'extérieur de la soupape (5).

8. Dispositif suivant la revendication 7, **caractérisé en ce que** les moyens d'actionnement (10) sont étanchés par rapport au couvercle de maintenance (12).

9. Dispositif suivant l'une des revendications précédentes, **caractérisé en ce que** le plan de l'ouverture (19) s'étend perpendiculairement à l'axe de rotation de la roue de pompe.

10. Dispositif suivant l'une des revendications précédentes, **caractérisé en ce que** le plan de l'ouverture de maintenance (13) se situe perpendiculairement au plan dans lequel tourne la roue de pompe.

11. Dispositif suivant l'une des revendications précédentes, **caractérisé en ce que** la soupape (5) est une soupape à trois voies.

12. Dispositif suivant l'une des revendications précédentes, **caractérisé en ce qu'**il est intégré dans un groupe hydraulique d'une installation combinée d'eau de chauffage et d'eau sanitaire.
